# EUROPÄISCHE PATENTSCHRIFT

(11) **EP 0 408 492 B1**
(45) Veröffentlichungstag und Bekanntmachung des Hinweises auf die Patenterteilung: **29.09.1993**
(21) Anmeldenummer: 90810470.6
(22) Anmeldetag: 22.06.1990
(51) Int. Cl.: F16B 37/10, F16B 37/00, F16B 39/28

(54) **Schraubenmutter**
Screw nut
Ecrou avec filetage

(30) Priorität: 12.07.1989 DE 3922957
(43) Veröffentlichungstag der Anmeldung: 16.01.1991
(73) Patentinhaber: Erowa AG, CH-5734 Reinach (CH)
(72) Erfinder: Schneider, Rudolf, CH-6362 Stansstad (CH)
(74) Vertreter: Rottmann, Maximilian R.

(56) Entgegenhaltungen:
- WO-A-86/01266
- DE-A- 2 354 867
- DE-A- 2 723 058
- DE-A- 3 344 240
- DE-U- 7 146 313
- US-A- 1 375 781

## Beschreibung

Die vorliegende Erfindung betrifft eine Schraubenmutter mit einem zentralen Innengewinde nach dem Oberbegriff des Anspruchs 1 sowie auf ein Verfahren zur Herstellung einer solchen Schraubenmutter. Solche Schraubenmuttern können an jeder beliebigen Stelle auf eine Gewindespindel aufgesetzt werden kann.

Aus der PCT-WO 86/01266 ist eine zweiteilige Schraubenmutter bekannt geworden, die an jeder Stelle auf eine Gewindespindel aufgesetzt werden kann. Dazu werden die beiden im wesentlichen Segment- oder halbmondförmigen Teile werden um die Gewindespindel herumgelegt und ineinander eingerastet, so dass die so entstandene Mutter auf der Gewindespindel festgezogen werden kann. Der Nachteil dieser Schraubenmutter besteht darin, dass Sie aufwendig und teuer in der Herstellung, umständlich zu handhaben und nur mit Hilfe eines speziellen Werkzeuges wieder zu lösen ist.

Eine dreiteilige Schraubenmutter, die an jeder beliebigen Stelle auf eine Gewindespindel aufgesetzt werden kann, ohne dass sie vom Ende derselben her eingeschraubt werden muss, ist aus der PCT-WO 87/07928 bekannt geworden. Sie besitzt eine eigentliche, in ihrer Axialebene in zwei Hälften geteilte Mutter mit einem Aussengewinde, auf die eine Arretiermutter aufgeschraubt werden kann. Die beiden Hälften der eigentlichen Mutter werden an der gewünschten Stelle um die Gewindespindel herumgelegt, die Arretiermutter wird über das Ende der Gewindespindel geschoben und bis zur zweiteiligen Mutter bewegt und schliesslich auf das Aussengewinde der zweiteiligen Mutter aufgeschraubt. Auch hier ist eine aufwendige und damit teure Herstellung und eine umständliche Handhabung festzustellen. Ein weiterer Nachteil ist, dass die Arretiermutter über das Ende der Gewindespindel aufgeschoben werden muss, was deren Verwendung ausschliesst, wenn das Ende nicht freiliegt oder nicht zugänglich ist.

Aus der US-PS 1,375,781 ist eine einteilige Schraubenmutter bekannt geworden, welche an jeder beliebigen Stelle auf einen Gewindebolzen geschoben werden kann. Sie besitzt zu diesem Zweck einen radial verlaufenden Schlitz, der in eine zentrale Bohrung mündet. Letztere ist an ihren Innenwänden mit sich über höchstens die Hälfte des Umfangs erstreckenden Gewindegängen versehen. Diese Schraubenmutter ist zwar einfach aufgebaut und bietet keine Schwierigkeiten bei der Handhabung; der Nachteil ist jedoch, dass die Schraubenmutter bei deren Anziehen die Tendenz hat, sich vom Schraubenbolzen radial wegzubewegen, so dass nur noch ein sehr kleiner Teil des Gewindes trägt. Damit ist diese Schraubenmutter nur für vergleichsweise sehr geringe Anzugsmomente geeignet, selbst wenn sie aus hochfestem Stahl gefertigt wird.

Aus dem DE-GM 71 46 313 schliesslich ist eine Schraubenmutter bekannt geworden, die ebenfalls an jeder Stelle eines Schraubenbolzens auf dessen Gewinde aufgesetzt werden kann. Bei dieser Konstruktion ist zwar die Tendenz geringer, dass sich die Schraubenmutter vom Schraubenbolzen radial wegbewegen kann, da deren Einschubspalt eine geringere Breite aufweist als der Schraubenbolzendurchmesser. Damit die Schraubenmutter aber überhaupt auf den Schraubenbolzen aufgesetzt werden kann, muss die Schraubenmutter aus federelastischem Material bestehen. Dies begrenzt aber wiederum das maximal zulässige Anzugsmoment auf einen vergleichsweise geringen Wert, da die Schraubenmutter nicht aus einem hochfesten Metall hergestellt werden kann, weil dann die Kräfte, die zur federelastischen Verformung der Schraubenmutter aufgebracht werden müssen, viel zu hoch wären.

Es ist die Aufgabe der vorliegenden Erfindung, eine Schraubenmutter der gattungsgemässen Art so weiterzubilden, dass sie sehr einfach im Aufbau und daher preisgünstig in der Herstellung ist, die keine Tendenz hat, beim Festziehen radial vom Schraubenbolzen wegzuwandern und die demnach für hohe Anzugsmomente geeignet ist.

Gemäss der Erfindung wird dies bei einer Schraubenmutter der im Oberbegriff des Anspruchs 1 genannten Art durch die im Kennzeichen des Anspruchs 1 angegebenen Merkmale erreicht. Bevorzugte Ausführungsformen und Weiterbildungen des Erfindungsgegenstandes sind in den abhängigen Ansprüchen 2-4 umschrieben.

Insbesondere ist es vorteilhaft, die zu belastenden Gewindeflanken im Bereich des zentralen Innengewindes mit Ausnehmungen zu versehen, welche eine Tiefe aufweisen, die ca. 10-30% der Gewindesteigung entspricht. Damit kann erreicht werden, dass die Schraubenmutter während des Anziehens gegen die Gewindespindel gepresst wird und in genau zentrierter Lage auf dieser sitzt.

Es versteht sich, dass in diesem Fall die Schraubenmutter nur in einer bestimmten Position auf die Gewindespindel aufgesetzt werden soll. Daher empfiehlt es sich, die der zu belastenden Endfläche gegenüberliegende Seite der Schraubenmutter zu markieren, z.B. durch unterschiedliche Formgebung oder optische Kennzeichnung.

Ferner betrifft die Erfindung ein Verfahren zur Herstellung einer solchen Schraubenmutter, das sich durch die Merkmale des Anspruchs 5 auszeichnet. Bevorzugte Ausführungsformen des Verfahrens sind in den Ansprüchen 6 und 7 umschrieben.

Im folgenden wird ein Ausführungsbeispiel der erfindungsgemässen Schraubenmutter anhand beiliegender Zeichnungen näher beschrieben. In den Zeichnungen zeigen:
- Fig. 1: eine schematische perspektivische Ansicht einer Schraubenmutter nach der Erfindung;
- Fig. 2: eine Abwicklung der zentralen Gewindebohrung und der daran anschliessenden Innenwände des radialen Schlitzes;
- Fig. 3: einen Teilaxialschnitt durch eine Schlitzseitenwand;
- Fig. 4: einen Teilaxialschnitt durch die Innengewinde-Seitenwand; und
- Fig. 5: einen Horizontalschnitt durch die Schraubenmutter.

Die Schraubenmutter 1 besitzt ein zentrales Innengewinde 2 und einen radial verlaufenden, nach aussen offenen, parallelen Schlitz 3. Die Breite des Schlitzes 3 entspricht dem Durchmesser des zentralen Innengewindes 2, so dass die Schraubenmutter 1 auf eine (nicht dargestellte) Gewindespindel oder einen Schraubenbolzen aufgesteckt werden kann.

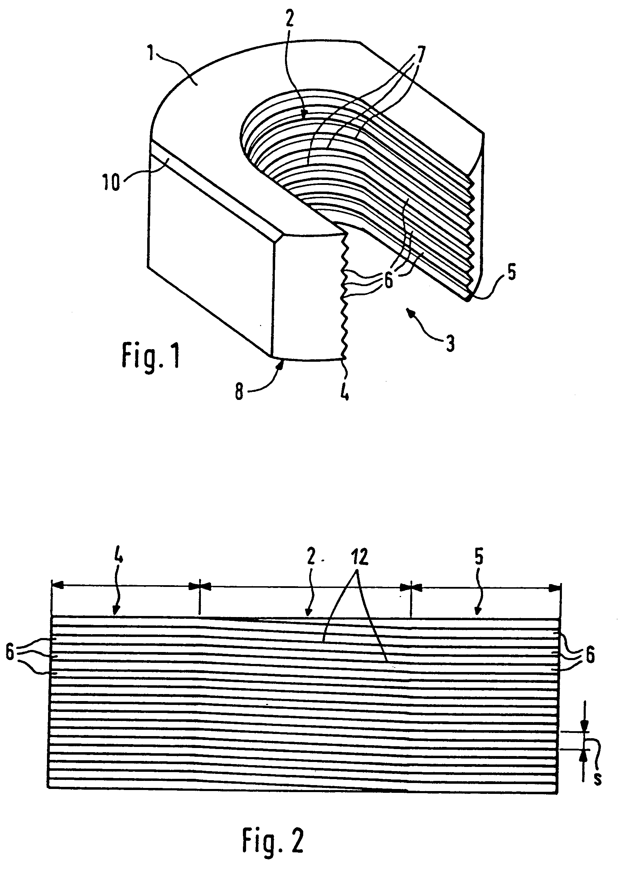

Die Innenwände 4 und 5 des Schlitzes 3 sind mit senkrecht zur Achse der Schraubenmutter 1 verlaufenden, parallelen Nuten 6 versehen. Das Profil der Nuten 6 entspricht dem Gewindeprofil des zentralen Innengewindes 2. Aus der Fig. 2 ist ersichtlich, dass die Nuten 6 der Schlitzwand 4 gegenüber den Nuten 6 der Schlitzwand 5 um eine halbe Gewindesteigung s versetzt angeordnet sind. Damit wird ein Verkanten der Schraubenmutter 1 während des Aufschiebens auf die Gewindespindel vermieden, da die Gewindegänge der Gewindespindel auf gegenüberliegenden Seiten ebenfalls um eine halbe Gewindesteigung versetzt sind.

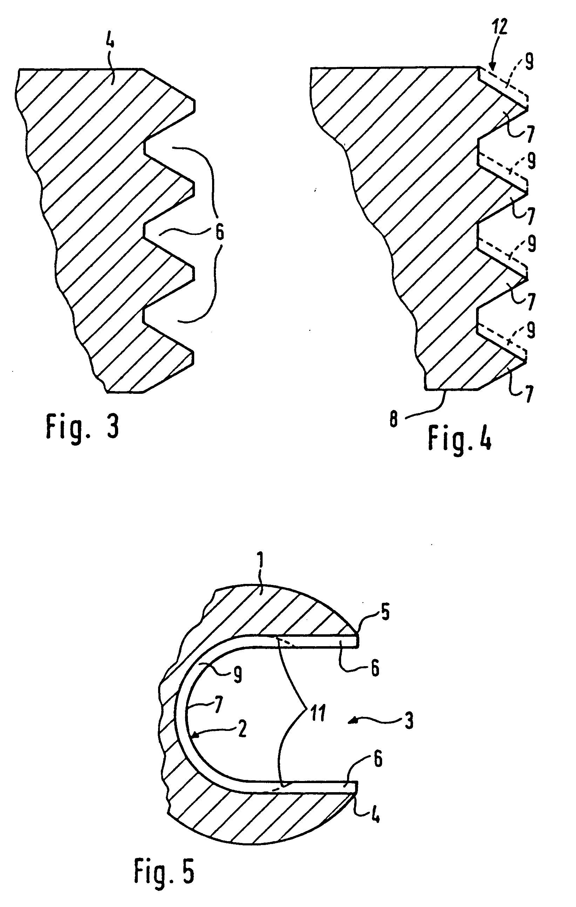

Aus dem Schnitt von Fig. 3 ist ersichtlich, dass das Profil der Innenwand 4 genau der Geometrie eines Normgewindes entspricht. Es versteht sich, dass die Innenwand 4 der Geometrie des Innengewindes 2 angepasst ist. Dasselbe gilt für die Innenwand 5.

Aus den Fig. 4 und 5 ist ersichtlich, dass im Bereich des zentralen Innengewindes 2, die zu belastenden Gewindeflanken 12 der Gewindegänge 7 mit Ausnehmungen 9 versehen sind, welche sich axial gegen die zu belastende Endfläche 8 der Schraubenmutter 1 hin erstrecken. Diese Ausnehmungen haben eine Tiefe die etwa 10-30 % der Gewindesteigung entspricht. Die daraus resultierende Schwächung des Gewindes ist minim und kann in den allermeisten Fällen vernachlässigt werden.

Aus der Fig. 5 geht klar hervor, dass sich diese Ausnehmungen 9 über etwas mehr als einen Halbkreis erstrecken, was durch die gestrichelten Linien 11 angedeutet ist; dadurch ergibt sich ein zwangsläufiger Zentriereffekt, wenn die auf die Gewindespindel aufgesteckte Schraubenmutter 1 angezogen wird, so dass sich diese nicht von der Gewindespindel wegbewegen kann, wo sie nur noch auf einem Teil des Gewindes tragen würde. Beim Festziehen der Schraubenmutter 1 werden hauptsächlich die gegen die zu belastende Endfläche 8 gerichteten Gewindeflanken 12 des Innengewindes 2 belastet. Es ist dabei wesentlich, die Schraubenmutter 1 richtig herum auf die Gewindespindel aufzusetzen. Zu diesem Zweck ist die gegenüberliegende, also freie Endfläche der Schraubenmutter mit einer Markierung versehen, die im Ausführungsbeispiel gemäss Fig. 1 die Form einer Fase 10 haben kann. Es sind aber auch andere, z.B. optische wie Farbmarkierungen oder Einprägungen denkbar.

Die Herstellung der Schraubenmutter erfolgt mit Hilfe eines speziellen Fräsers. Ausgehend von einem Mutterrohling mit einem zentralen Kernloch mit für das beabsichtigte Gewinde geeignetem Durchmesser wird zunächst auf konventionelle Art ein paralleler Schlitz mit einer Breite wie das Kernloch eingeschnitten. Dann wird der Fräser mit konstanter achsialer Lage der Innenwand 4 des Schlitzes 3 entlangbewegt in einer zur Achse durch die Schraubenmutter senkrechten Richtung; dabei werden die Nuten 6 herausgefräst. Anschliessend wird der Fräser der Innenwand des Kernloches auf einer Kreisbahn entlangbewegt und gleichzeitig kontinuierlich entlang seiner Rotationsachse verschoben, derart, dass bei einer Rotation um einen Halbkreis eine Verschiebung um die halbe Gewindesteigung erfolgt. Darauf wird der Fräser, der sich nun am hinteren Ende der Innenwand 5 befindet, dieser entlang bis zur Öffnung des Schlitzes 3 bewegt, wobei die achsiale Lage wiederum konstant gehalten wird. So werden die Nuten 6 in die Innenwand 5 eingefräst.

Schliesslich wird der Fräser wieder an den Übergang der Innenwand 4 zum Innengewinde 2 geführt und seine achsiale Lage wird gegenüber der ursprünglichen Lage, in der das Gewinde eingefräst wurde, um einen geringen Betrag in der Grössenordnung von 10-30 % der Gewindesteigung verschoben. Endlich werden, ausgehend von dieser verschobenen Lage, die Ausnehmungen 9 eingefräst, indem der Fräser wieder auf einem Halbkreis bewegt wird und dabei kontinuierlich in seiner achsialen Lage um eine halbe Gewindesteigung verschoben wird.

Die gesamte Bearbeitung der Innenwände 4 und 5 sowie der zentralen Bohrung 2 erfolgt mit Hilfe desselben Fräsers. Der Herstellungsvorgang lässt sich vollständig automatisieren und erfolgt äusserst schnell, z.B. bei einer Stahl-Schraubenmutter innerhalb von 3-5 Sekunden.

## Patentansprüche

1. Schraubenmutter mit einem zentralen Innengewinde (2), welche mit einem radialen, in der Breite im wesentlichen dem Durchmesser des zentralen Innengewindes (2) entsprechenden Schlitz (3) zur seitlichen Einführung eines Schraubenbolzens oder einer Gewindespindel versehen ist, dadurch gekennzeichnet, dass die zu belastenden Gewindeflanken (12) im Bereich des zentralen Innengewindes (2) mit Ausnehmungen (9) versehen sind, welche sich axial gegen die zu belastende Endfläche (8) hin über mindestens einen Halbkreis erstrecken.

2. Schraubenmutter nach Anspruch 1, dadurch gekennzeichnet, dass die Innenwände (4, 5) des Schlitzes (3) mit sich an die Gewindegänge (7) des zentralen Innengewindes (2) anschliessenden, parallelen Nuten (6) versehen sind, wobei die parallelen Nuten (6) der einen Innenwand (4) in der Höhe um eine halbe Steigung (s) gegenüber den Nuten (6) der anderen Innenwand (5) versetzt sind.

3. Schraubenmutter nach Anspruch 1, dadurch gekennzeichnet, dass die Tiefe der Ausnehmungen (9) 10 bis 30% der Gewindesteigung (s) beträgt.

4. Schraubenmutter nach Anspruch 1 oder 3, dadurch gekennzeichnet, dass die der zu belastenden Endfläche (8) gegenüberliegende Seite der Schraubenmutter (1) durch unterschiedliche Formgebung (10) oder optische Kennzeichnung markiert ist.

5. Verfahren zur Herstellung der Schraubenmutter nach einem der Ansprüche 1-4, dadurch gekennzeichnet, dass die parallelen Nuten (6) in den Innenwänden (4, 5) des Schlitzes (3) und die zentrale Gewindebohrung (2) aus dem Schraubenmutterkörper gefräst werden und anschliessend die zentrale Gewindebohrung (2) in einer in Achsialrichtung um einen geringen Betrag verstellten Lage nachgefräst wird.

6. Verfahren nach Anspruch 5, dadurch gekennzeichnet, dass das Fräswerkzeug beim Nachfräsen um einen Betrag verstellt wird, der 10 bis 30% der Gewindesteigung entspricht.

7. Verfahren nach Anspruch 5 oder 6, dadurch gekennzeichnet, dass das Fräsen der Nuten (6) in den Innenwänden (4, 5) des Schlitzes (3), das Fräsen der Gewindegänge (7) der zentralen Gewindebohrung (2) und das Nachfräsen der letzteren mit demselben Fräswerkzeug erfolgt.

## Claims

1. Screw nut with a central internal thread (2), which is provided with a radial slot (3) corresponding in width substantially to the diameter of the central internal thread (2), for the lateral introduction of a screw bolt or a threaded spindle, characterised in that the thread flanks (12) to be loaded are provided with recesses (9), in the region of the central internal thread (2), which recesses (9) extend axially over at least a semicircle towards the end face (8) to be loaded.

2. Screw nut according to Claim 1, characterised in that the inner walls (4, 5) of the slot (3) are provided with parallel grooves (6) adjoining the thread courses (7) of the central internal thread (2), the parallel grooves (6) of one inner wall (4) being staggered vertically by half a pitch (s) with respect to the grooves (6) of the other inner wall (5).

3. Screw nut according to Claim 1, characterised in that the depth of the recesses (9) amounts to 10 to 30% of the thread pitch (s).

4. Screw nut according to Claim 1 or 3, characterised in that the side of the screw nut (1) lying opposite the end face (8) to be loaded is marked by different shaping (10) or optical marks.

5. Method for the manufacture of the screw nut according to one of Claims 1 to 4, characterised in that the parallel grooves (6) are milled in the inner walls (4, 5) of the slot (3) and the central threaded bore (2) is milled from the screw nut body and then the central threaded bore (2) is finally milled in a position adjusted by a small amount in the axial direction.

6. Method according to Claim 5, characterised in that at the time of finally milling, the milling tool is adjusted by an amount which corresponds to 10 to 30% of the thread pitch.

7. Method according to Claim 5 or 6, characterised in that the milling of the grooves (6) in the inner walls (4, 5) of the slot (3), the milling of the thread courses (7) of the central thread bore (2) and the final milling of the latter take place with the same milling tool.

## Revendications

1. Ecrou, comprenant un filetage intérieur central (2) et pourvu d'une fente radiale (3) dont la largeur correspond pratiquement au diamètre du filetage intérieur central (2), cette fente (3) servant à l'introduction transversale d'une vis cylindrique ou d'une tige filetée, caractérisé en ce que les flancs (12) du filetage intérieur central (2) qui doivent être soumis à une charge sont pourvus, dans la zone de ce filetage, d'évidements (9) qui s'étendent axialement, sur au moins un demi-cercle, vers la surface d'extrémité (8) devant être soumise à une charge.

2. Ecrou suivant la revendication 1, caractérisé en ce que les parois intérieures (4, 5) de la fente (3) sont pourvues de rainures parallèles (6) se raccordant aux filets (7) du filetage intérieur central (2), les rainures parallèles (6) de l'une (4) des parois intérieures étant décalées en hauteur d'un demi-pas (s) par rapport aux rainures (6) de l'autre paroi intérieure (5).

3. Ecrou suivant la revendication 1, caractérisé en ce que la profondeur des évidements (9) est comprise entre 10 et 30 % du pas (s) du filetage.

4. Ecrou suivant l'une des revendications 1 et 3, caractérisé en ce que la face de l'écrou (1 ) qui est située à l'opposé de la surface d'extrémité (8) devant être soumise à une charge est marquée au moyen d'une conformation différente (10) ou d'une identification visuelle.

5. Procédé de fabrication d'un écrou suivant l'une des revendications 1 à 4, caractérisé en ce qu'on réalise les rainures parallèles (6) par fraisage dans les parois intérieures (4, 5) de la fente (3) et on réalise le taraudage central (2) par fraisage du corps de l'écrou, puis on soumet le taraudage central (2) à un fraisage supplémentaire dans une position décalée d'une faible valeur en direction axiale.

6. Procédé suivant la revendication 5, caractérisé en ce que, lors du fraisage supplémentaire, on déplace l'outil de fraisage d'une valeur qui est comprise entre 10 et 30 % du pas du filetage.

7. Procédé suivant l'une des revendications 5 et 6, caractérisé en ce qu'on exécute au moyen du même outil de fraisage le fraisage des rainures (6) des parois intérieures (4, 5) de la fente (3), le fraisage des filets (7) du taraudage central (2) et le fraisage supplémentaire de ce dernier.
